# EUROPÄISCHE PATENTSCHRIFT

(11) **EP 1 750 093 B1**
(45) Veröffentlichungstag und Bekanntmachung des Hinweises auf die Patenterteilung: **20.01.2010**
(21) Anmeldenummer: 06117769.7
(22) Anmeldetag: 25.07.2006
(51) Int. Cl.: G01C 21/34, G08G 1/0968

(54) **Verfahren und Vorrichtung zum Navigieren von Verkehrsteilnehmern**
Navigation method and navigation system
Procédé et dispositif de navigation

(30) Priorität: 29.07.2005 DE 102005035602
(43) Veröffentlichungstag der Anmeldung: 07.02.2007
(73) Patentinhaber: ROBERT BOSCH GMBH, 70442 Stuttgart (DE)
(72) Erfinder: Frese, Thomas, 58706, Menden (DE); Aumayer, Richard, 31199, Diekholzen (DE)

(56) Entgegenhaltungen:
- EP-A2- 1 102 227
- EP-A2- 1 271 104
- DE-A1- 10 203 242

## Beschreibung

Die vorliegende Erfindung betrifft ein Verfahren zum Navigieren von Verkehrsteilnehmern, bei dem Verkehrsinformationen zu Verkehrsmeldungen codiert, von einem Sender an mehrere Empfänger übertragen, anschließend in den Empfängern decodiert werden und von einem Navigationssystem aufgrund der berücksichtigten Verkehrsmeldung eine erste Ausweichroute zu einer ursprünglich berechneten Route berechnet wird. Die Erfindung betrifft ferner eine Vorrichtung zur Durchführung des erfindungsgemäßen Verfahrens.

Dynamische Navigationsverfahren beruhen auf der Übermittlung von Verkehrsinformationen an die Verkehrsteilnehmer unter Berücksichtigung der aktuellen Verkehrssituation. Es sind mehrere verschiedene standardisierte Verfahren zur Übermittlung der aktuellen Verkehrssituation an Verkehrsteilnehmer, insbesondere an Fahrer von Kraftfahrzeugen des Individualverkehrs, bekannt. Die Standardisierung von Inhalten bezieht sich bei Meldungen von Verkehrsstörungen auf die Art der Störung, beispielsweise "Stau" oder "Vollsperrung", auf Ursachen, beispielsweise "Unfall" oder "Glatteis" sowie auf die Ausdehnung und die voraussichtliche Dauer. Außerdem ist die Codierung des Ortes einer Störung erforderlich.

Beispielsweise ist ein digitales Datenübertragungssystem (RDS, Radio Data System) für UKW-Sender bekannt. Das Format des RDS-Datentelegrammes liegt in Europa einheitlich fest und enthält neben anderen Codes auch einen TMC-Code (Traffic Message Channel). Dieser dient zur Übertragung formalisierter Standardinformationen und ist in ISO 14819-1, -2, -3 beschrieben. Die Informationen lassen sich per Sprachgenerator - in beliebiger Landessprache - abrufen. In Navigationssystemen können die Meldungen über Verkehrshindernisse zur Neuberechnung einer optimalen Wegstrecke beziehungsweise Route umgehend berücksichtigt werden.

Anwendungen zur Übertragung verkehrsrelevanter Informationen von und zu Fahrzeugen und deren nachfolgende, meist automatische Auswertung fasst man unter dem Begriff Verkehrstelematik zusammen und sind hinreichend bekannt.

Bei den derartigen Verfahren wird die Verkehrssituation digital codiert und die codierte Verkehrsmeldung beispielsweise über Luftschnittstellen versendet. Fahrzeugendgeräte, beispielsweise Radiogeräte und/oder Navigationsgeräte, können solche Verkehrsmeldungen automatisiert verarbeiten und anschließend bei der Routenberechnung mit berücksichtigen.

An den bekannten Verfahren ist jedoch nachteilig, dass alle Fahrzeuge mit einem entsprechenden Empfangsgerät die Verkehrsmeldungen empfangen und in gleicher Weise berücksichtigen. Dadurch wird Fahrzeugen, die in derselben Richtung auf die Verkehrsbehinderung zufahren, dieselbe Ausweichroute vorgeschlagen wird. Dies hat zur Folge, dass die Ausweichroute selbst überlastet wird und somit ein neues Verkehrshindernis entsteht. Die Überlastung der Ausweichroute kann auch nicht gezielt verhindert werden, da eine erst drohende Überlastung der Ausweichroute oftmals nicht Gegenstand der Verkehrsinformationen ist und demzufolge in diesem Stadium nicht von den Navigationssystemen berücksichtigt werden kann.

Deshalb wird in der DE 10 2004 035 897 vorgeschlagen, dass die codierten Verkehrsmeldungen zusätzlich zu der Verkehrsinformation einen Anteilsfaktor aufweisen, durch den angegeben wird, welcher Anteil der mehreren Empfänger die jeweilige Verkehrsmeldung berücksichtigen sollen. Dadurch wird der Verkehrsstrom auf mehrere Verkehrsströme aufgeteilt, die anteilsmäßig steuerbar sind. Die systembedingte und von einem System vorgenommene Aufteilung lässt individuelle Anforderungen des Verkehrsteilnehmers an die Ausweichroute unberücksichtigt, da für jeden Verkehrsteilnehmer entschieden wird, bleibt er im Hauptverkehrsstrom oder wird er einem bestimmten Ausweichverkehrsstrom zugeteilt.

Die EP-A-1 271 104 offenbart ein Verfahren zum Navigieren von Verkehrsteilnehmern, bei dem codierte Verkehrsmeldungen empfangen, decodiert und von einem Navigationssystem derart berücksichtigt werden, dass mindestens zwei Ausweichrouten zu einer ursprünglichen Route bestimmt werden, wobei dem Fahrzeugführer Informationen über Fahrzeiten oder Fahrstrecken entlang der Ausweichrouten als Entscheidungskriterium für eine Auswahl einer der Routen zur Kenntnis gebracht werden. Die EP-A-1 102 227 und die DE-A-102 03 242 offenbaren dem vergleichbare Lösungen.

Aufgabe der vorliegenden Erfindung ist es, die dynamische Navigation von Verkehrsteilnehmern zu verbessern, wobei die vorstehenden Nachteile überwunden und insbesondere eine Überlastung von Ausweichrouten vermieden wird.

Diese Aufgabe wird durch ein Verfahren mit den Merkmalen des Anspruchs 1 sowie durch eine Vorrichtung mit den Merkmalen des Anspruchs 9 gelöst. Wesentliche Idee ist, dass wenigstens eine zweite Ausweichroute von dem Navigationssystem berechnet wird und dass zusätzliche Informationen zu entlang einer Ausweichroute befindlichen Points-of-Interests ermittelt werden.

Der Vorteil des erfindungsgemäßen Verfahrens besteht darin, dass der Verkehrsstrom in Richtung auf das Verkehrshindernis zusätzlich auf wenigstens zwei weitere Verkehrsströme auf den Ausweichrouten aufgeteilt wird. Die Aufteilung erfolgt dabei individuell und muss nicht von einer Zentralstelle gesteuert und/oder vorgegeben werden. Jedes Navigationssystem berechnet selbstständig mehrere mögliche Alternativen zu der ursprünglich berechneten Route. Hierdurch wird die Zentralstelle entlastet, da sie lediglich die Verkehrsinformation übermittelt, denn die Auswertung dieser Information erfolgt nur auf Seiten der Verkehrsteilnehmer.

Durch die Aufteilung des ursprünglichen Verkehrsstromes auf wenigstens drei Verkehrsströme wird zum einen die ursprüngliche Route entlastet und zum anderen vermieden, dass die empfohlenen Ausweichrouten selbst überlastet werden. Der Verkehrsfluss kann also gleichmäßiger gestaltet werden. Dabei verbessert sich die Verkehrssituation mit der Anzahl berechneter und empfohlener Ausweichrouten. Dabei hängt die Anzahl zur Verfügung stehender Ausweichrouten sowohl von den konkreten örtlichen Verhältnissen als auch von der Verkehrssituation auf diesen Routen ab.

Zweckmäßig wird die zweite und gegebenenfalls weitere Ausweichroute vom Navigationssystem berechnet, indem zuvor berechnete Ausweichrouten zumindest abschnittsweise unberücksichtigt bleiben. Für die Berechnung der Ausweichrouten kann dem Navigationssystem vorgegeben werden, dass es bestimmte Streckenabschnitte nicht berücksichtigt, zum Beispiel indem diesen Streckenabschnitten der Status "gesperrt" zugeordnet wird. Die Berechnung der Ausweichrouten gestaltet sich dann wie folgt: zunächst wird die Ausgangsroute, die überlastet ist oder zu überlasten droht, dem Navigationssystem als "gesperrt" vorgegeben. Bei der anschließenden Neuberechnung einer Route vom augenblicklichen Aufenthalts- zum Zielort bleibt dieser "gesperrte" Streckenabschnitt unberücksichtigt. Die so ermittelte Route stellt die erste Ausweichroute dar. Um die zweite Ausweichroute zu ermitteln, wird zusätzlich zur Ausgangsroute auch der ersten Ausweichroute oder zumindest Abschnitten der ersten Ausweichroute der Status "gesperrt" zugeordnet und die Routenberechnung erneut durchgeführt. Die Ermittlung weiterer Ausweichrouten erfolgt entsprechend.

Vorzugsweise werden zu den Ausweichrouten vom Navigationssystem zusätzliche Informationen zur Fahrstrecke und/oder zur Fahrzeit ermittelt und dem Verkehrsteilnehmer zur Verfügung gestellt. Erfindungsgemäß werden den Informationen zu entlang Ausweichrouten befindlichen Points-of-Interest ermittelt und dem Verkehrsteilnehmer zur Verfügung gestellt. Beispielsweise kann der Verkehrsteilnehmer an Informationen zur Länge des Umweges oder des zu erwartenden Zeitverlustes interessiert sein, wenn er auf eine empfohlene Ausweichroute ausweicht. Ferner kann für ihn wichtig sein, ob es entlang einer Ausweichroute Sehenswürdigkeiten, Rast- oder Tankgelegenheiten gibt.

Die berechneten Ausweichrouten können empfängerseitig akustisch und/oder visuell ausgegeben werden. Die visuelle Ausgabe kann beispielsweise auf dem Display eines Radios und/oder Navigationssystems, aber auch auf der Windschutzscheibe oder dem Visier eines Motorradhelmes erfolgen. Eine akustische Ausgabe bietet gegenüber visuellen Ausgaben den Vorteil, dass ein Fahrer sein Augenmerk vollständig auf die Straße und das Verkehrsgeschehen richten kann.

Der Verkehrsteilnehmer bzw. Fahrer hat die Möglichkeit, über eine Eingabevorrichtung eine Ausweichroute aus mehreren berechneten Ausweichrouten auszuwählen. Dies kann beispielsweise manuell über das Radio und/oder Navigationssystem oder ein Funktionslenkrad erfolgen. Denkbar ist aber auch eine sprachgesteuerte Eingabe mittels eines Mikrofons und einer Spracherkennung. Die Auswahl kann zweckmäßig über Vorschlagsnummern erfolgen, die den Ausweichrouten jeweils zugeordnet sind.

In einer weiteren Ausführungsform des erfindungsgemäßen Verfahrens ist vorgesehen, dass die Auswahl einer Ausweichroute aus mehreren berechneten Ausweichrouten zufällig durchgeführt wird. Dem Fahrer wird die ausgewählte Ausweichroute vorgeschlagen. Mittels einer geeigneten Eingabevorrichtung kann der Fahrer sich dafür entscheiden, ob er den Vorschlag annehmen oder sich die nächste Ausweichroute ausgeben lassen möchte. Dabei kann das Navigationssystem die Auswahl einer der Ausweichrouten beispielsweise zufällig, alternativ in Abhängigkeit der Einschaltzeit des Navigationssystems (etwa nach gerader/ungerader Minute des Einschaltens) oder in Abhängigkeit der Entfernung und/oder der voraussichtlichen Fahrzeit bis zur Verkehrsbehinderung durchgeführt werden. Aber auch weitere vordefinierte Informationen, wie etwa die Bereitschaft zur Zahlung von Mautgebühren, ein möglichst kurzer Umweg oder ein möglichst geringer Zeitverlust können Entscheidungskriterien sein.

Die erfindungsgemäße Vorrichtung zur Durchführung des Verfahrens weist eine Empfangsantenne zum Empfangen codierter Verkehrsmeldungen, eine Prozessoreinrichtung zum Decodieren empfangener Verkehrsmeldungen, ein Navigationssystem zum Berechnen wenigstens zweier Ausweichrouten aufgrund der berücksichtigten Verkehrsmeldungen, eine Ausgabevorrichtung und eine Eingabevorrichtung sowie Mittel zur Ermittlung von Informationen zu entlang einer Ausweichroute befindlichen Points-of-Interest auf. Dadurch können dem Verkehrsteilnehmer wenigstens zwei Ausweichrouten zur Auswahl angeboten werden und der gesamte Verkehrsfluss auf wenigstens drei Routen (Ausgangsroute und wenigstens zwei Ausweichrouten) verteilt werden, wodurch der Verkehrsfluss gleichmäßiger erfolgt und Überlastungen der Ausweichrouten vermieden werden.

Bevorzugt weist die erfindungsgemäße Vorrichtung eine Ausgabevorrichtung zum akustischen und/oder visuellen Ausgeben der berechneten Ausweichrouten sowie eine Eingabevorrichtung zum manuellen und/oder sprachgesteuerten Eingeben von Auswahlentscheidungen des Verkehrsteilnehmers auf.

Vorteilhaft ist die erfindungsgemäße Vorrichtung derart ausgebildet, dass zur Berechnung der ersten oder einer weiteren Ausweichroute die Ausgangsroute bzw. zuvor berechnete Ausweichroute ganz oder abschnittsweise von der Berechnung der Ausweichroute ausgenommen wird. Dazu wird die Ausgangsroute bzw. die schon berechnete Ausweichroute für die Neuberechnung der nächsten Ausweichroute für vorteilhaft ganz oder abschnittsweise alle gesperrt markiert, d.h. beispielsweise dem entsprechenden Straßenabschnitten in der digitalen Karte ein hoher Widerstand zugeordnet.
Die Erfindung wird nachfolgend anhand eines Ausführungsbeispiels und Bezug auf die beigefügten Zeichnungen beispielhaft näher erläutert. Diese zeigen in:
- Fig. 1 -: ein Ausführungsbeispiel der erfmdungsgemäßen Vorrichtung,
- Fig. 2 -: eine schematische Darstellung einer ursprünglichen Ausgangsroute und von drei Ausweichrouten,
- Fig. 3 -: eine vereinfachte und schematische Dateifolge einer Ausweichroute.

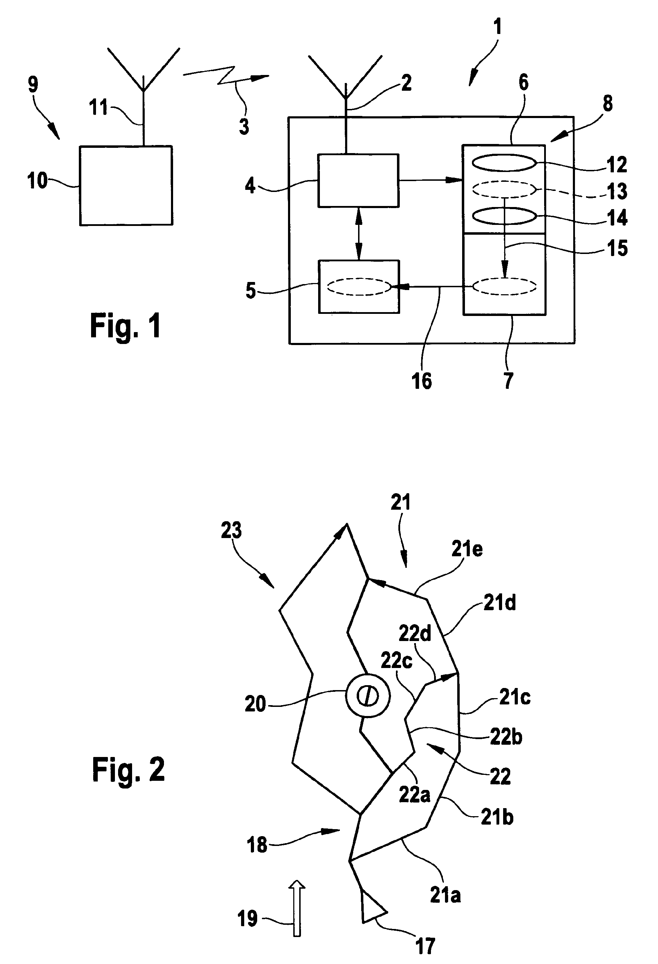

In der Figur 1 ist schematisch ein Ausführungsbeispiel der erfindungsgemäßen Vorrichtung skizziert. Ein Empfänger 1 empfängt über eine Antenne 2 eine codierte Verkehrsmeldung 3 über Funk- bzw. Radiosignale, die durch den Pfeil in der Figur angedeutet werden. Der Empfänger 1 weist eine Prozessoreinrichtung 4 auf, die die codierte Verkehrsmeldung 3 decodiert. Die Prozessoreinrichtung 4 kann die decodierte Verkehrsmeldung an ein Navigationssystem 5 und/oder eine Ausgabevorrichtung 6 weiterleiten. Die Ausgabevorrichtung 6 ist zusammen mit einer Eingabevorrichtung 7 in einer kombinierten Ein/Ausgabevorrichtung 8 mit einem Touch-Screen-Display untergebracht.

Der Empfänger 1 befindet sich in einem Fahrzeug, das sich auf einer zuvor eingegebenen Ausgangsroute von einem Startpunkt in Richtung auf einen Zielpunkt hin bewegt. Eine Radiostation 9 oder ein externer Dienstanbieter (TCS, Traffic-Service-Center) erhält die Verkehrsinformation, dass sich auf zumindest einer der Straßen in dem Verkehrsnetz ein Verkehrshindernis, beispielsweise ein Stau, gebildet hat. Diese Verkehrsinformation wird daraufhin zu einer Verkehrsmeldung digital codiert und über einen Sender 10 mit einer Antenne 11 über eine Luftschnittstelle versendet und von dem Empfänger 1 empfangen.

Das Navigationssystem 5 erkennt, dass sich das Verkehrshindernis in Fahrtrichtung befindet und berechnet eine erste Ausweichroute 12, indem der ursprünglichen Ausgangsroute der Status "gesperrt" zugewiesen wird und bei einer Neuberechnung einer weiteren Ausweichroute vom augenblicklichen Aufenthaltsort bis zum Zielpunkt nicht berücksichtigt wird. Die so berechnete Route stellt die zweite Ausweichroute 13 dar. Schließlich wird auch diese zweite Ausweichroute 13 auf den Status "gesperrt" gesetzt und eine dritte Ausweichroute 14 berechnet.

Das Navigationssystem 5 ist zuvor dahingehend programmiert worden, dass genau drei Ausweichrouten berechnet werden. Der Fahrer kann das Navigationssystem 5 aber auch anders einstellen, beispielsweise dahingehend, dass ihm beispielsweise zwei, vier oder auch mehr Ausweichrouten angezeigt werden.

Anschließend werden die drei Ausweichrouten 12, 13, 14 auf dem Display der Ausgabevorrichtung 6 visuell angezeigt und mit Vorschlagsnummern, beispielsweise 1, 2, 3, und mit weiteren Informationen zu den jeweiligen Fahrstrecken bzw. Umwegen und den jeweiligen zu erwartenden Fahrtzeiten bzw. Zeitverlusten versehen. Zusätzlich können Angaben zu den Ausweichrouten auch über Lautsprecher (nicht dargestellt) akustisch ausgegeben werden.

Die Ausweichrouten sind in dem Ausführungsbeispiel nach der Länge der Fahrstrecke angeordnet, das heißt, dass bei der Ausweichroute 12 mit dem geringsten und bei der Ausweichroute 14 der größte Umweg zurückzulegen ist. Dem Navigationssystem 5 kann aber vorgegeben werden, die Ausweichrouten nach dem geringsten zu erwartenden Zeitverlust oder anderen Kriterien anzuzeigen. Dies können beispielsweise Points-of Interests sein, beispielsweise Tankstellen, Restaurants, Hotels und/oder Sehenswürdigkeiten in der Nähe der Ausweichroute.

Über das Touch-Screen-Display der Ein/Ausgabevorrichtung 8 hat der Fahrer die gestrichelt dargestellte zweite Ausweichroute 13 ausgewählt. Durch die Pfeile 15 und 16 wird angedeutet, dass die Auswahl der Ausweichroute 13 an das Navigationssystem 5 weitergegeben und der weiteren Zielführung bei der Navigation zugrunde gelegt wird.

In Figur 2 bewegt sich ein Fahrzeug 17, das als Dreieck dargestellt ist, auf einer ursprünglichen Ausgangsroute 18 in im Wesentlichen nördlicher Richtung, die in der Figur 2 durch den Pfeil 19 angedeutet wird. In Fahrtrichtung des Fahrzeugs 17 hat sich ein Verkehrshindernis 20 gebildet. Nachdem die Verkehrsinformation hinsichtlich des Verkehrshindernisses 20 mittels einer codierten Verkehrsmeldung von einem Sender 9 (Figur 1) an das Navigationssystem 5 (Figur 1) in dem Fahrzeug 17 übermittelt und dort decodiert worden ist, hat das Navigationssystem 5 die drei Ausweichrouten 21, 22, 23 ermittelt.

Die Ausweichrouten 21, 22, 23 sind als Polygonzüge dargestellt, deren Teilabschnitte jeweiligen Straßenabschnitten entsprechen. Beispielsweise besteht die Ausweichroute 21 aus den Teilabschnitten 21a, 21b, 21c, 21d und 21e und die Ausweichroute 22 aus den Teilabschnitten 22a, 22b, 22c, 22d, 21d und 21e.

Die Ausweichrouten 21 und 22 weisen beide die Teilabschnitte 21 d und 21 e auf. Bei diesen Teilabschnitten 21 d und 21 e handelt es sich um mehrspurige Straßenabschnitte, auf denen nicht mit einer Überlastung zu rechnen ist. Dagegen stellen die Teilabschnitte 21a, 21b und 21c kleinere Straßen dar, zum Beispiel einspurige Straßen, die leicht zu überlasten drohen.

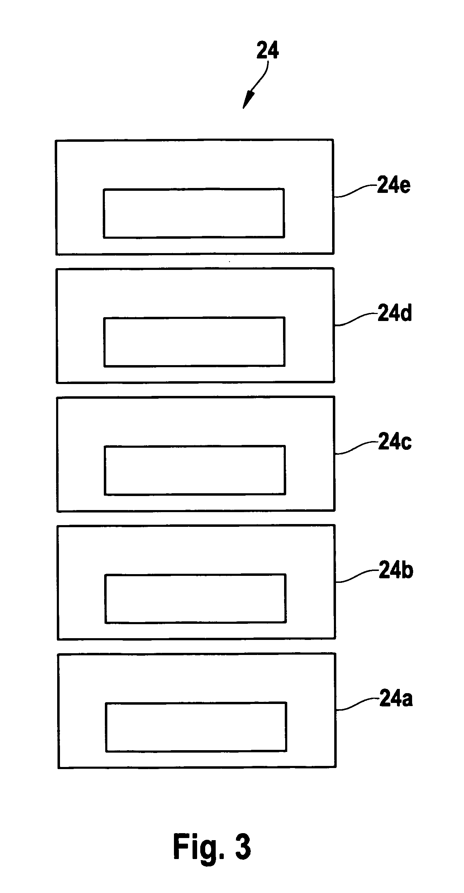

Die Ausweichrouten 21, 22, 23 werden in dem Navigationssystem in Form von Dateifolgen dargestellt und verarbeitet. Dies ist in der Figur 3 beispielhaft anhand der Dateifolge 24 für die Ausweichroute 21 schematisch und vereinfacht dargestellt. Die Dateifolge 24 umfasst die fünf Dateien 24a, 24b 24c, 24d und 24e. Jede dieser Dateien 24a, 24b, 24c, 24d und 24e repräsentiert einen Teilabschnitt 21a, 21b, 21c, 21 d und 21 e der Ausweichroute 21. Beispielsweise ist dem Teilabschnitt 21a die Datei 24a und dem Teilabschnitt 21 d die Datei 24d zugeordnet. Die Dateien 24a, 24b, 24c, 24d und 24e enthalten Informationen zu den einzelnen Teilabschnitten 21a, 21b, 21c, 21 d und 21 e, zum Beispiel Informationen zur geographischen Lage und Länge, zu Knoten, Straßenart, Straßenbeschränkungen und Anzahl der Spuren.

Darüber hinaus ist in jeder Datei 24a, 24b, 24c, 24d und 24e eine Statusvariable zur Vorgabe eines Status vorgesehen, der einen Teilabschnitt 21a, 21b, 21c, 21d und 21e näher charakterisiert. Beispielsweise gibt der Status 1 an, dass ein Teilabschnitt 21a, 21b, 21c, 21 d und 21 e für das Fahrzeug 17 freigegeben ist, der Status 0 dagegen, dass ein Teilabschnitt 21a, 21b, 21c, 21d und 21e für dieses Fahrzeug gesperrt ist.

Die Statusvariable kann von dem Navigationssystem nach Bedarf gesetzt werden. In diesem Beispiel hat das Navigationssystem nach Erhalt der Verkehrsmeldung zunächst die Ausweichroute 21 ermittelt. Anschließend wurden die Statusvariablen für die Ausweichroute 21 in der Folge 0-0-0-1-1 gesetzt und die Berechnung der zweiten Ausweichroute 22 gestartet. Für die Berechnung dieser zweiten Ausweichroute 22 hat das Navigationssystem die Teilabschnitte 21a, 21b und 21c unberücksichtigt gelassen, da diese den Status 0 zugeteilt bekommen hatten und damit als "gesperrt" galten. Hingegen hatte das Navigationssystem den Teilabschnitten 21 d und 21 e den Status 1 zugeteilt, so dass diese Teilabschnitte 21 d und 21 e auch für die zweite Ausweichroute zur Verfügung standen und auch berücksichtigt worden sind.

Für die Ermittlung der dritten Ausweichroute 23 wurden die Statusvariablen sämtlicher Teilabschnitte der Ausweichrouten 21 und 22 auf den Wert 0 gesetzt (nicht dargestellt), so dass die dritte Ausweichroute 23 keinen Teilabschnitt mit den Ausweichrouten 21 und 22 gemeinsam hat.

Der Fahrer des Fahrzeugs kann über eine Eingabeeinheit eine Ausweichroute auswählen, die sodann der weiteren Zielführung zugrunde gelegt wird. Dazu können den Ausweichrouten Nummern zugeordnet sein, etwa die Nummer 1 für die Ausweichroute 21, die Nummer 2 für die Ausweichroute 22 und die Nummer 3 für die Ausweichroute 23. Die Eingabe kann beispielsweise über ein Touch-Screen-Display, Eingabetasten oder sprachgesteuert erfolgen.

## Patentansprüche

1. Verfahren zum Navigieren von Verkehrsteilnehmern, bei dem Verkehrsinformationen zu Verkehrsmeldungen (3) codiert, von einem Sender (9) an mehrere Empfänger (1) übertragen, anschließend in den Empfängern (1) decodiert werden und von einem Navigationssystem (5) aufgrund der berücksichtigten Verkehrsmeldung (3) eine erste Ausweichroute zu einer ursprünglich berechneten Route berechnet wird und wenigstens eine zweite Ausweichroute von dem Navigationssystem (5) berechnet wird
**dadurch gekennzeichnet,**
**dass** vom Navigationssystem (5) zusätzliche Informationen zu entlang den Ausweichrouten befindlichen Points-of-Interest ermittelt werden.

2. Verfahren nach Anspruch 1, **dadurch gekennzeichnet, dass** die zweite Ausweichroute und gegebenenfalls weiteren Ausweichrouten vom Navigationssystem (5) berechnet wird/werden, bei dem zuvor berechnete Ausweichrouten zumindest abschnittsweise unberücksichtigt bleiben.

3. Verfahren nach Anspruch 1 oder 2, **dadurch gekennzeichnet, dass** zu den Ausweichrouten vom Navigationssystem (5) zusätzliche Informationen zur Fahrstrecke und/oder zur Fahrzeit ermittelt werden

4. Verfahren nach einem der vorstehenden Ansprüche, **dadurch gekennzeichnet, dass** empfängerseitig die berechneten Ausweichrouten akustisch und/oder visuell ausgegeben werden.

5. Verfahren nach Anspruch 4, **dadurch gekennzeichnet, dass** über eine Eingabevorrichtung (7) eine Ausweichroute aus mehreren berechneten Ausweichrouten von dem Verkehrsteilnehmer ausgewählt wird.

6. Verfahren nach einem der Ansprüche 1 bis 4, **dadurch gekennzeichnet, dass** die Auswahl einer Ausweichroute aus mehreren berechneten Ausweichrouten zufällig durchgeführt wird.

7. Verfahren nach einem der Ansprüche 1 bis 4, **dadurch gekennzeichnet, dass** die Auswahl einer Ausweichroute aus mehreren berechneten Ausweichrouten in Abhängigkeit der Einschaltzeit des Navigationssystems (5) durchgeführt wird.

8. Verfahren nach einem der Ansprüche 1 bis 4, **dadurch gekennzeichnet, dass** die Auswahl einer Ausweichroute aus mehreren berechneten Ausweichrouten in Abhängigkeit der Entfernung und/oder der voraussichtlichen Fahrzeit bis zu einem Verkehrshindernis durchgeführt wird.

9. Vorrichtung zur Durchführung des Verfahrens nach einem der Ansprüche 1 bis 8 mit einer Empfangsantenne (2) zum Empfangen codierter Verkehrsmeldungen (3), mit einer Prozessoreinrichtung (4) zum Decodieren empfangener Verkehrsmeldungen (3), mit einem Navigationssystem (5) zum Berechnen wenigstens zweier Ausweichrouten aufgrund der berücksichtigten Verkehrsmeldung (3), mit Mitteln (5) zur Ermittlung von Informationen zu entlang den Ausweichrouten befindlichen Points-of-Interest, mit einer Ausgabevorrichtung (6) und einer Eingabevorrichtung (7).

10. Vorrichtung nach Anspruch 9, **dadurch gekennzeichnet, dass** die Ausgabe akustisch und/oder visuell erfolgt.

11. Vorrichtung nach Anspruch 9 oder 10, **dadurch gekennzeichnet, dass** die Eingabe manuell und/oder sprachgesteuert erfolgt.

## Claims

1. Method for navigating road users, in which traffic information relating to traffic reports (3) is coded, transmitted from a transmitter (9) to a plurality of receivers (1), then decoded in receivers (1), and a navigation system (5) takes the traffic report (3) under consideration as a basis for calculating a first alternative route for an originally calculated route, and at least one second alternative route is calculated by the navigation system (5),
**characterized**
**in that** the navigation system (5) ascertains additional information relating to points of interest situated along the alternative routes.

2. Method according to Claim 1, **characterized in that** the second alternative route and possibly further alternative routes is/are calculated by the navigation system (5), wherein at least sections of previously calculated alternative routes are disregarded.

3. Method according to Claim 1 or 2, **characterized in that** additional information relating to the distance and/or to the journey time is ascertained for the alternative routes by the navigation system (5).

4. Method according to one of the preceding claims, **characterized in that** the receiver end audibly and/or visually outputs the calculated alternative routes.

5. Method according to Claim 4, **characterized in that** an input apparatus (7) is used by the road user to select an alternative route from a plurality of calculated alternative routes.

6. Method according to one of Claims 1 to 4, **characterized in that** an alternative route is selected from a plurality of calculated alternative routes at random.

7. Method according to one of Claims 1 to 4, **characterized in that** an alternative route is selected from a plurality of calculated alternative routes on the basis of the switched-on time of the navigation system (5).

8. Method according to one of Claims 1 to 4, **characterized in that** an alternative route is selected from a plurality of calculated alternative routes on the basis of the distance and/or the probable journey time to a traffic obstacle.

9. Apparatus for carrying out the method according to one of Claims 1 to 8 with a reception antenna (2) for receiving coded traffic reports (3), with a processor device (4) for decoding received traffic reports (3), with a navigation system (5) for calculating at least two alternative routes on the basis of the traffic report (3) under consideration, with means (5) for ascertaining information relating to points of interest situated along the alternative routes, with an output apparatus (6) and with an input apparatus (7).

10. Apparatus according to Claim 9, **characterized in that** the output is effected audibly and/or visually.

11. Apparatus according to Claim 9 or 10, **characterized in that** the input is effected manually and/or under voice control.

## Revendications

1. Procédé de navigation pour participants au trafic dans lequel :
des informations concernant le trafic sont codées en messages (3) concernant le trafic,
sont transmises par un émetteur (9) à plusieurs récepteurs (1),
sont ensuite décodées dans les récepteurs (1),
un premier itinéraire de remplacement d'un itinéraire initialement calculé étant calculé par un système de navigation (5) en tenant compte du message (3) concernant le trafic et au moins un deuxième itinéraire de remplacement étant calculé par le système de navigation (5),
**caractérisé en ce que**
des informations supplémentaires concernant des points d'intérêt situés sur les itinéraires de remplacement sont déterminées par le système de navigation (5).

2. Procédé selon la revendication 1, **caractérisé en ce que** le deuxième itinéraire de remplacement et éventuellement d'autres itinéraires de remplacement sont calculés par le système de navigation (5) et **en ce qu'**au moins certaines parties des itinéraires de remplacement précédemment calculés sont prises en compte.

3. Procédé selon les revendications 1 ou 2, **caractérisé en ce que** des informations supplémentaires concernant la distance et/ou la durée du déplacement sont déterminées par le système de navigation (5) pour les itinéraires de remplacement.

4. Procédé selon l'une des revendications précédentes, **caractérisé en ce que** les itinéraires de remplacement calculés sont présentés acoustiquement et/ou visuellement sur le récepteur.

5. Procédé selon la revendication 4, **caractérisé en ce que** le participant au trafic sélectionne par l'intermédiaire d'un dispositif d'introduction (7) un itinéraire de remplacement parmi plusieurs itinéraires de remplacement calculés.

6. Procédé selon l'une des revendications 1 à 4, **caractérisé en ce que** la sélection d'un itinéraire de remplacement parmi plusieurs itinéraires de remplacement calculés est réalisée de manière aléatoire.

7. Procédé selon l'une des revendications 1 à 4, **caractérisé en ce que** la sélection d'un itinéraire de remplacement parmi plusieurs itinéraires de remplacement calculés est réalisée en fonction de la durée de branchement du système de navigation (5).

8. Procédé selon l'une des revendications 1 à 4, **caractérisé en ce que** la sélection d'un itinéraire de remplacement parmi plusieurs itinéraires de remplacement calculés est réalisée en fonction de la distance et/ou de la durée de déplacement prévisibles jusqu'à un obstacle au trafic.

9. Dispositif en vue de l'exécution du procédé selon l'une des revendications 1 à 8, doté :
d'une antenne de réception (2) qui reçoit des messages codés (3) concernant le trafic,
d'un dispositif à processeur (4) qui décode les messages concernant le trafic (3) reçus,
d'un système de navigation (5) qui calcule au moins deux itinéraires de remplacement en tenant compte du message (3) concernant le trafic,
de moyens (5) de détermination d'informations concernant des points d'intérêt situés sur les itinéraires de remplacement,
d'un dispositif de sortie (6) et
d'un dispositif d'introduction (7).

10. Dispositif selon la revendication 9, **caractérisé en ce que** les sorties s'effectuent acoustiquement et/ou visuellement.

11. Dispositif selon les revendications 9 ou 10, **caractérisé en ce que** l'introduction s'effectue manuellement et/ou par commande vocale.
